# EUROPEAN PATENT SPECIFICATION

(11) **EP 0 507 381 B1**
(45) Date of publication and mention of the grant of the patent: **12.03.1997**
(21) Application number: 92200856.0
(22) Date of filing: 26.03.1992
(51) Int. Cl.: G05B 23/02, G05B 19/05

(54) **Method of processing control instruction**
Verfahren zum Verarbeiten von Steueraufträgen
Procédé de traitement d'ordres de commande

(30) Priority: 02.04.1991 EP 91200758
(43) Date of publication of application: 07.10.1992
(73) Proprietor: Philips Electronics N.V., 5621 BA Eindhoven (NL)
(72) Inventor: van Steenbrugge, Bernhard, NL-5656 AA Eindhoven (NL)
(74) Representative: Steenbeek, Leonardus Johannes

(56) References cited:
- EP-A- 0 071 296
- EP-A- 0 137 225
- EP-A- 0 165 600
- DE-A- 2 900 380
- US-A- 4 209 838

## Description

The invention relates to a method of processing control instructions received from at least two identifiable sources via a communication connection. Such a method can be used, *inter alia,* in apparatuses which are coupled together by means of a bus. These may be audio and video apparatuses, but also, for example washing machines, microwave ovens, luminaries and the like.

The invention also relates to an apparatus provided with a control circuit adapted to perform the method.

Lately, apparatuses have been provided with a connection for coupling them to a common bus. By means of this bus a plurality of apparatuses can be operated from one point in the house. It is also possible to transmit all kinds of control instructions from each apparatus to any other apparatus which is connected. An example of such a bus is known under the name of Domestic Digital Bus (frequently abbreviated to D2B bus) which is described, for example, in chapter 11 (The D2B Concept) of the User Manual of Single-Chip 8-bit Microcontrollers, published by Philips Electronic Components and Materials, 1986. The D2B bus provides easy operation of, for example, an audio/video system comprising a plurality of apparatuses. For example, a video recorder may automatically switch on a television receiver and tune this receiver to the correct video recorder channel when a video tape is to be displayed.

Apparatuses having a D2B connection will often also have their own infrared receiver so that they can also be used as stand-alone apparatuses. Such apparatuses may be implemented in such a way that a control instruction which has been received by the infrared receiver and cannot be carried out by the apparatus itself is passed on *via* the D2B bus to an apparatus which does have the required facilities. The latter apparatus then need not have an infrared receiver of its own, or it may be accommodated in a closed space. If more apparatuses having their own infrared receivers are coupled together *via* the D2B bus, a problem arises which will now be illustrated with reference to an example. An audio/video system comprises a video recorder, a television monitor and an audio amplifier with loudspeakers. The video recorder, provided with an infrared receiver, receives the operating command "volume up" from an infrared transmitter for increasing the sound volume by one step, but it cannot carry out this command itself because it lacks a built-in audio amplifier section. The same applies to the television monitor which is also provided with an infrared receiver. In a previously performed installation phase both apparatuses have been programmed to pass on control instructions relating to sound functions *via* the D2B bus to the audio amplifier accommodated in a cabinet. The apparatuses will attempt to do this simultaneously or substantially simultaneously. In response to an arbitration procedure described in the Reference the two instructions will be passed on to the audio amplifier one after the other. The audio amplifier now receives the control instruction "volume up" from both apparatuses and will carry out the two instructions. The result is that the volume is raised by two steps, which may generally not have been the user's intention. If the user keeps the "volume up" key on the infrared hand-held remote control unit depressed, this operating command is generated in a repetitive manner and both apparatuses will pass on the corresponding control instruction also in a repetitive manner to the audio amplifier. The volume will now be raised twice faster than is desirable.

Apparatuses passing on a control instruction to another connected apparatus via the D2B bus will hereinafter be referred to as sources. The apparatus for which these control instructions are intended is provided with a control circuit receiving and processing the control instructions. It is to be noted that the control circuit can identify the source of a control instruction. For this purpose, and as indicated in the Reference, each "D2B message" on the bus does not only comprise the control instruction and a "slave address" (with which the apparatus is addressed) but also a "master address" which identifies the source of the message.

It is an object of the invention to provide a method preventing the unwanted consequences of identical control instructions which have been received more than once.

A first aspect of the invention is characterized in that the method comprises the steps of: storing, upon execution of a received control instruction, an instruction code corresponding to the received control instruction to obtain a stored instruction code and a source code corresponding to a source of the received control instruction to obtain a stored source code, comparing a next instruction code of a next received control instruction with the stored instruction code, comparing a next source code of the next received control instruction with the stored source code, and omitting the execution of the next received control instruction if the next instruction code is equal to the stored instruction code and the next source code does not match the stored source code. It is thereby achieved that from a series of identical control instructions from different sources only the instruction is carried out from the source whose source code was already stored. The control instructions from the other sources are redundant and are ignored. If repetitive control instructions are received, only the instructions from said one and the same source is carried out.

It is a second aspect of the invention to provide an apparatus for processing control instructions, as characterized in Claim 4.

A further embodiment of the method is characterized in that execution of the next control instruction is omitted if also less than a predetermined period of time has been elapsed between the reception of the next control instruction and the reception of a control instruction preceding the next control instruction. In that case the control instruction from the transmitter whose control instruction is received first after the predetermined period of time has elapsed will be performed.

Another embodiment of the method is characterized in that the method further comprises the steps of: storing the next source code if the execution of the next control instruction is omitted, and erasing all stored source codes if the next control instruction is executed except the next source code corresponding to the source of which the control instruction is being executed. The effect achieved thereby will be explained with reference to an example. Let it be assumed that of a series of identical control instructions from different transmitters the instruction from transmitter A is executed and the instruction from transmitter B is ignored. It is now possible that the instruction from transmitter A is absent in a subsequent series of control instructions, for example, because the infrared receiver of the corresponding apparatus was temporarily covered. It is also possible that the control instruction from transmitter A in the subsequent series is received later than the control instruction from transmitter B, for example, because transmitter A has lost the previously mentioned arbitration procedure. Of the subsequent series, the control instruction from transmitter B is now performed. Thus, each control instruction is performed actually and without any delay.

Fig. 1 shows diagrammatically a communication system in which the method according to the invention is used.

Fig. 2 shows the structure of a message transmitted *via* the communication bus shown in Fig. 1.

Fig. 3 shows a flow chart of a control program performed by a control circuit shown in Fig. 1.

Figs. 4 and 5 show examples of some messages occurring on the communication bus.

Fig. 6 shows the flow chart of a further example of the control program performed by the control circuit shown in Fig. 1.

Fig. 7 shows a further example of some messages which occur on the communication bus.

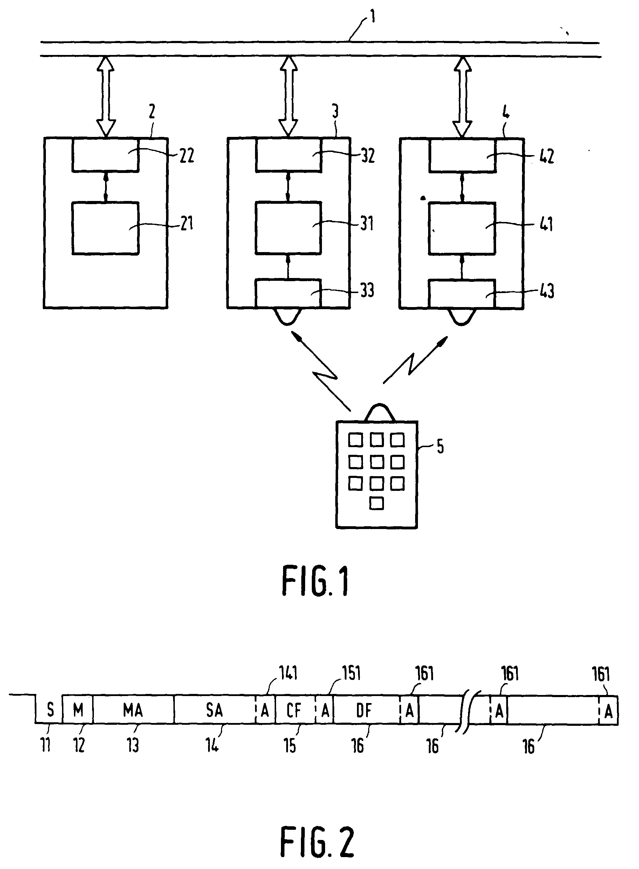

Fig. 1 shows diagrammatically a communication system. The system comprises a communication bus 1 for transmitting control instructions. In this case three apparatuses 2, 3 and 4 are connected to this communication bus. The apparatuses may be simple or complicated, for example, a television apparatus, a recorder, a washing machine, a microwave oven, a luminaire, a sensor for the outside temperature, etc. The function of the apparatus is controlled by a local microprocessor 21, 31 and 41. The microprocessor comprises in further known manner a ROM for storing a control program and a RAM for storing variable data. For receiving control instructions from other apparatuses and for transmitting control instructions to other apparatuses, the microprocessor in each apparatus is coupled to the communication bus 1 by means of an interface circuit 22, 32 and 42. Such an interface circuit is, for example, the integrated circuit SAx1235 of the firm of Philips. In the apparatuses 3 and 4 the microprocessor is also coupled to an infrared receiver 33 and 43 for receiving operating commands which are generated by a remote control unit 5.

Fig. 2 shows the structure at information level of a message transmitted *via* the communication bus. For a detailed description at bit level, reference is made to the Reference stated in the opening paragraph. The message shown in Fig. 2 comprises a start bit 11, a mode field 12, a master address 13, a slave address 14, a control field 15 and one or more data fields 16. The mode field 12 indicates the bit rate with which the message is transmitted. The master address 13 comprises 12 bits and identifies the apparatus at whose initiative the message is transmitted. This apparatus is referred to as the master station. The slave address 14 also comprises 12 bits and indicates the addressed apparatus. This apparatus is referred to as slave station. The control field 15 describes the nature of the message and indicates, *inter alia*, whether the message comprises a read or a write operation. It is to be noted that the master station and the slave station can both transmit and receive. It will hereinafter be assumed that the master station operates as a transmitter and the slave station operates as a receiver. The data fields 16 comprise 8 bits each and indicate the control instruction to be transmitted. Each data field is terminated by a bit (not shown) indicating whether the corresponding data field is the last of the message.

If a plurality of apparatuses is to use the communication bus simultaneously or substantially simultaneously, an arbitration procedure will be carried out. Briefly summarized, the substance of this procedure is that during the transmission of the start bit, the mode field and the master address a master station checks whether each transmitted bit is actually put on the bus. If this is not the case, the relevant master station will withdraw. The arbitration procedure results in only one master station being active after the master address has been transmitted. Other master stations will wait until the end of the message and at a later stage they will make another attempt to use the bus. The remaining master station now transmits the slave address 14 of the apparatus for which a control instruction is intended. As is shown in Fig. 2, the slave address comprises a space 141. If a slave station recognizes its own address, it will transmit an acknowledge bit A in this space. If the master station does not detect this bit A, it means that the slave station is not present or does not function. The message is then immediately ended. In a corresponding way the slave station transmits an acknowledge bit in a space 151 after recognition of the control field 15 and in a space 161 after correct reception of each data field 16.

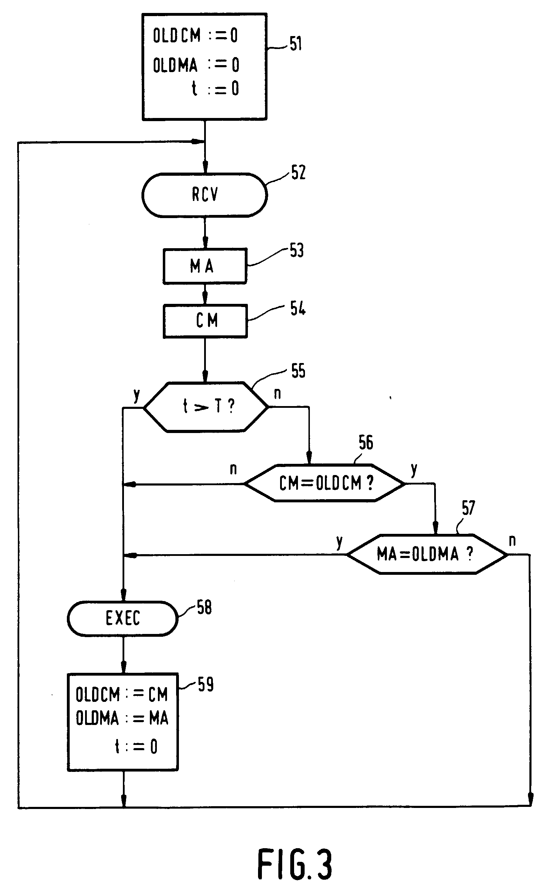

Fig. 3 shows a flow chart of a control program performed by the microprocessor in each apparatus. In a step 51 of this control program, which step is performed when the apparatus is switched on, an initial value is assigned to a number of variables in the RAM of the microprocessor. An instruction code OLDCM is intended to keep a record of the last control instruction performed by the apparatus. A source code OLDMA is intended to keep a record of the apparatus from which the last performed control instruction was received. In the initial step 51 the two variables acquire a pseudo-value, for example, the value of zero so as to indicate that no control instructions have been received yet. A counter t has the initial value of zero. This counter represents an elapse time which is autonomically increased by the microprocessor.

In a sub-program RCV, which is denoted by the reference numeral 52, it is subsequently checked whether the apparatus is addressed by on of the other apparatuses *via* the communication bus. As previously noted, the slave address (14 in Fig. 2) is to this end compared with the own address of the apparatus and in the case of recognition the acknowledge bit A is transmitted. Subsequently, in a step 53, the received master address (13 in Fig. 2) is stored in a variable which will be denoted by MA. Finally, the data fields (16 in Fig. 2) are read in a step 54. These data fields constitute the actual control instruction which must be carried out by the addressed apparatus. The control instruction thus received is provisionally stored in a variable which will be denoted by CM.

In a step 55 the count of the counter t is compared with a predetermined value T. If the value of t exceeds T, a predetermined period of time, for example, 1 second has elapsed and a sub-program 58 is performed. The sub-program 58 comprises the actual performance of the control instruction and is separately specified for each apparatus. Subsequently, the step 59 is performed. In this step a value which is representative of the performed control instruction is assigned to the instruction code OLDCM. Moreover, the master address MA, which identifies the transmitter of the control instruction, is stored in the source code OLDMA. Finally, the value of zero is assigned to the counter t. Thereafter the control program returns to the sub-program 52 to check whether more control instructions are received.

If it has been determined in the step 55 that the predetermined period of time T has not elapsed yet when a control instruction is received, it is checked in a step 56 whether the received control instruction CM is equal to the previously executed control instruction OLDCM. If this is not the case, the control instruction in the sub-program 58 is executed. If the two control instructions are equal, it is checked in a step 57 whether both of them have been transmitted by the same apparatus. To this end the master address MA in the received message is compared in the step 57 with the master address of the previously performed instruction stored in the source code OLDMA. If the two addresses are equal, the control instruction is executed. However, if the control instruction originates from another apparatus, the instruction will not be carried out.

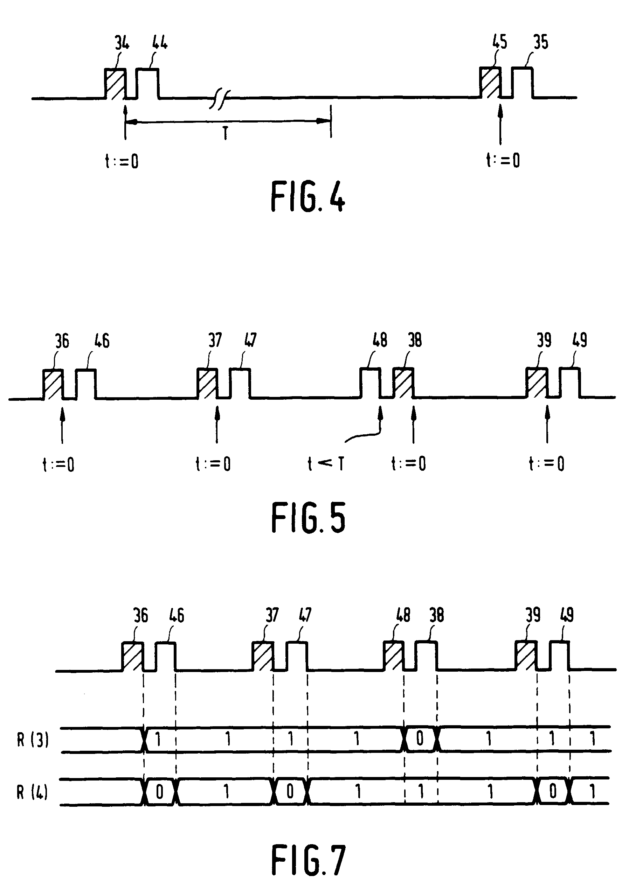

The control program described hereinbefore will now be used in the communication system shown in Fig. 1. To this end it is assumed that apparatus 2 in Fig. 1 is an audio amplifier, apparatus 3 is a television monitor and apparatus 4 is a video recorder. The monitor 3 and the video recorder 4 receive an infrared command "volume up" from the remote control unit 5. They cannot carry out this command themselves and have been programmed in a previously performed installation phase to pass on sound control commands to the audio amplifier 2 *via* the communication bus 1. Fig. 4 diagrammatically shows in a time sequence the messages which occur at the communication bus in response to the "volume up" command. More particularly, Fig. 4 shows a control instruction 34 from monitor 3 to amplifier 2 and a control instruction 44 from video recorder 4 to amplifier 2. As has been shown in the Figure, the control instruction 34 is the first to be transmitted because monitor 3 has won the arbitration procedure. Both control instructions indicate that the sound volume must be raised by one step. The audio amplifier will now execute control instruction 34, which is shown in a shaded form in the Figure. The control instruction 44 is not carried out because it relates to an identical control instruction which has been received within the predetermined period of time T after the instruction 34 has been carried out. The sound volume is therefore raised by one step, which is in conformity with the "volume up" command generated once. If the same command is generated again some time later, the audio amplifier will again receive two control instructions. In the Figure the new control instruction from the monitor is denoted by 35 and the new control instruction from the video recorder is denoted by 45. As indicated in Fig. 4, has now won the video recorder should win the arbitration procedure, so the audio amplifier will receive the control instruction 45 first. Now, the audio amplifier will perform the control instruction 45 from the video recorder, which instruction is shaded in the Figure. The control instruction 35 from the monitor is now ignored. The sound volume is again raised by not more than one step.

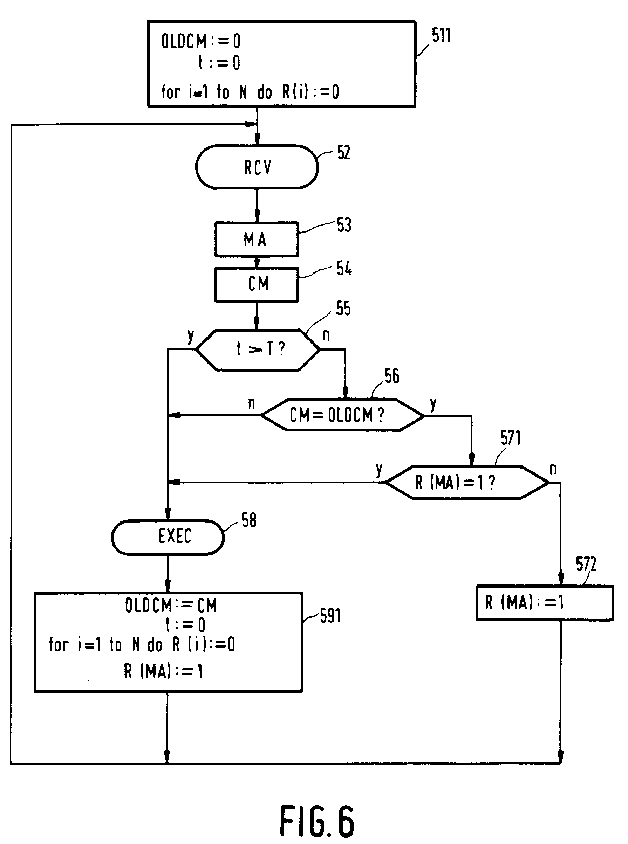

Fig. 5 diagrammatically shows in a time sequence the messages which occur on the communication bus if the "volume up" key on the remote control unit 5 (see Fig. 1) is kept depressed. In this situation the "volume up" command is generated in a repetitive manner with intervals of approximately 100-150 ms. In Fig. 5 the corresponding control instructions from the monitor are denoted by 36-39 and the control instructions from the video recorder are denoted by 46-49. It always depends on the result of the arbitration procedure which instruction is the first to be received by the audio amplifier. The Figure shows that the monitor wins the arbitration, except in the case of control instruction 38 which is preceded by control instruction 48 from the video recorder. As is shown in a shaded form in the Figure, the control instructions 36-39 from the monitor are invariably performed. This also applies to the control instruction 38. The corresponding control instruction 48 from the video recorder is ignored because the predetermined period of time T has not elapsed yet upon its reception.

Fig. 6 shows the flow chart of another example of the control program. In this Figure identical reference numerals denote the same elements as in Fig. 3. Characteristic of the example of the control program shown in Fig. 6 is the presence of an array R in the RAM of the microprocessor. The array R stores a source code for to each apparatus with the master address i in the form of an array element R(i) which can assume the logic value "0" or "1". In the course of the control program the logic value R(i) = "0" means that control instructions have not yet been received from the corresponding apparatus with master address i.

An initial step 511, in which, as previously described, a pseudo-value is assigned to the instruction code OLDCM and the value of zero is assigned to the counter t is performed by the control program. Moreover, in the step 511 the logic value of zero is assigned to all source codes R(i) so as to indicate that control instructions have not been received yet. Subsequently, a message is received in a manner already described in the sub-program 52, the master address MA of the source of this message is determined in the step 53 and the control instruction CM is read in the step 54. If the control instruction is actually executed in the sub-program 58, a step 591 is subsequently performed. In this step the current instruction CM is stored in the instruction code OLDCM and the counter is set to zero. More particularly, all source codes R(i) acquire the logic value "0" again after a control instruction has been executed, except for the source code R(MA) which corresponds to the apparatus from which the executed control instruction was received.

When a control instruction is received within a predetermined period of time (determined in step 55) after the previous execution of the same instruction (determined in step 56), step 571 is now performed. In this step 571 it is checked whether the source code R(MA) has the logic value "1". If R(MA) has the logic value "0", the control instruction from the corresponding apparatus has not been received since the last execution. Such an instruction is not executed because the instruction originating from another apparatus has "just" been performed, namely from the apparatus for which currently the source code R(i) = 1. In a step 572 the value "1" is assigned to the source code R(MA) so as to establish that the control instruction has been received from this apparatus.

If it has been determined in the step 571 that R(MA) has the value "1", this may have two causes. On the one hand, the control instruction may originate from the apparatus whose previous instruction was performed. On the other hand, the control instruction may originate from an apparatus whose previous instruction was received but ignored. In both cases the control instruction is executed now.

Fig. 7 again shows diagrammatically in a time sequence the repetitive messages occurring on the communication bus if the "volume up" key on the remote control unit 5 (see Fig. 1) is kept depressed. To explain this Figure, the values of the source codes R(3) and R(4) are plotted on the time axis. R(3) corresponds to monitor 3 and R(4) corresponds to video recorder 4. In contrast to Fig. 5, it is apparent from Fig. 7 that control instruction 48 from the video recorder is now executed and that the control instruction 38 from the monitor is ignored. This is accomplished by step 571 of the control program (see Fig. 6). In this step the source code R(4) is detected to have the value "1" when the control instruction 48 is received, which is caused by the fact that a control instruction 47 has already been received before (but not executed at that time) from the video recorder. The audio amplifier thus switches, as it were, temporarily from execution of control instructions from monitor 3 to execution of control instructions from video recorder 4. This is particularly sensible if there were circumstances which would lead to the absence of the control instruction 38. The control instruction 48 from the video recorder is thus executed if the control instruction 38 from the monitor is absent, for example, because the corresponding "volume up" command from the remote control unit has not reached the monitor due to a temporary interruption of the infrared light ray.

It is to be noted that the use of the method according to the invention is not limited to communication systems with a common communication bus. For example, an apparatus may also receive the control instructions from other apparatuses *via* individual connections. In that case a transmitting apparatus is not identified by a master address which is comprised in a received message, but by the physical location of the connection through which the control instructions are applied. It is also to be noted that not all sources have to be external apparatuses. For example, one of the sources may be accommodated in the apparatus itself and function as a sub-apparatus within this apparatus. An infrared receiver built in an apparatus constitutes a sub-device within the D2B system whose control instructions are equivalent to control instructions from external apparatuses. Such an internal source is not identified by the master address of the apparatus but by a sub-device address which is incorporated in the data fields of a D2B message.

## Claims

1. A method of processing control instructions received from at least two identifiable sources (3,4) via a communication connection (1), characterized in that the method comprises the steps of:
storing (59,591), upon execution (58) of a received control instruction, an instruction code (CM) corresponding to the received control instruction to obtain a stored instruction code (OLDCM) and a source code (MA) corresponding to a source (3,4) of the received control instruction to obtain a stored source code (OLDMA;R(MA)),
comparing (56) a next instruction code (CM) of a next received control instruction with the stored instruction code (OLDCM),
comparing (56) a next source code (MA) of the next received control instruction with the stored source code (OLDMA;R(MA)), and
omitting the execution (58) of the next received control instruction if the next instruction code (CM) is equal to the stored instruction code (OLDCM) and the next source code (MA) does not match the stored source code (OLDMA;R(MA)).

2. A method as claimed in claim 1, characterized in that execution (58) of the next control instruction is omitted if also less than a predetermined period of time (T) has been elapsed between the reception (52) of the next control instruction and the reception (52) of a control instruction preceding the next control instruction.

3. A method as claimed in claim 1 or 2, characterized in that the method further comprises the steps of:
storing (572) the next source code (R(MA)) if the execution (58) of the next control instruction is omitted, and
erasing (591) all stored source codes (R(MA)) if the next control instruction is executed (58) except the next source code (R(MA)) corresponding to the source (3,4) of which the control instruction is being executed.

4. An apparatus (2) for processing control instructions received from at least two identifiable sources (3,4) via a communication connection (1) the apparatus comprising:
an interface circuit (22) being coupled to the communication connection (1) for receiving control instructions, each control instruction comprising a source code (MA) corresponding to the source (3,4) which transmitted the control instruction, and an instruction code (CM) corresponding to a command embedded in the control instruction, characterized in that the apparatus further comprises a control circuit (21) adapted to:
store (59;591), upon execution (58) of a received control instruction (59,591), an instruction code (CM) corresponding to the received control instruction to obtain a stored instruction code (OLDCM),
store (59,591), upon execution (58) of the received control instruction, a source code (MA) corresponding to a source (3,4) of the received control instruction to obtain a stored source code (OLDMA;R(MA)),
compare (56) a next instruction code (CM) of a next received control instruction with the stored instruction code (OLDCM),
compare (56) a next source code (MA) of the next received control instruction with the stored source code (OLDMA;R(MA)), and
omit the execution (58) of the next received control instruction if the next instruction code (CM) is equal to the stored instruction code (OLDCM) and the next source code (MA) does not match the stored source code (OLDMA;R(MA)).

5. An apparatus as claimed in claim 4, characterized in that the control circuit (21) is further adapted to detect (55) whether a predetermined period of time (T) has been elapsed between the reception (52) of the next control instruction and the reception (52) of a control instruction preceding the next control instruction, and to omit the execution (58) of the next control instruction only if also less than the predetermined period of time (T) has been elapsed.

6. An apparatus as claimed in claim 4 or 5, characterized in that the control circuit (21) further comprises:
means for storing (572) the next source code (R(MA)) if the execution (58) of the next control instruction is omitted, and
means for erasing (591) all stored source codes (R(MA)) if the next control instruction is executed (58) except the next source code (R(MA)) corresponding to the source (3,4) of which the control instruction is being executed.

7. An apparatus as claimed in claim 4, characterized in that at least one of the sources (3,4) is constituted by a further apparatus which is coupled to the control circuit (21) by means of the communication connection (1).

## Patentansprüche

1. Verfahren zum Verarbeiten von Steueraufträgen, empfangen von wenigstens zwei identifizierbaren Quellen (3, 4) über eine Kommunikationsverbindung (1), dadurch gekennzeichnet, daß das Verfahren die nachfolgenden Verfahrensschritte aufweist:
das Speichern (59, 591), bei Durchführung (58) eines empfangenen Steuerauftrags, eines Auftragscodes (CM) entsprechend dem empfangenen Steuerauftrag zum Erhalten eines gespeicherten Auftragscodes (OLDCM) und eines Quellencodes (MA) entsprechend einer Quelle (3, 4) des empfangenen Steuerauftrags zum Erhalten eines gespeicherten Quellencodes (OLDMA; R(MA)),
das Vergleichen (56) eines nächsten Auftragscodes (CM) eines nächsten empfangenen Steuerauftrags mit dem gespeicherten Auftragscode OLDCM),
das Vergleichen (56) eines nächsten Quellencodes (MA) des nächsten empfangenen Steuerauftrags mit dem gespeicherten Quellencode (OLDMA; R(MA)), und
das Unterlassen der Durchführung (58) des nächsten empfangenen Steuerauftrags, wenn der nächste Auftragscode (CM) dem gespeicherten Auftragscode (OLDCM) entspricht und der nächste Quellencode (MA) dem gespeicherten Quellencode (OLDMA; R(MA)) nicht entspricht.

2. Verfahren nach Anspruch 1, dadurch gekennzeichnet, daß Erledigung (58) des nächsten Steuerauftrags unterlassen wird, wenn auch weniger als eine vorbestimmte Zeitperiode (T) zwischen dem Empfang (52) des nächsten Steuerauftrags und dem Empfang (52) eines dem nächsten Steuerauftrag vorhergehenden Steuerauftrags vergangen ist.

3. Verfahren nach Anspruch 1 oder 2, dadurch gekennzeichnet, daß das Verfahren weiterhin die nachfolgenden Verfahrensschritte aufweist:
das Speichern (572) des nächsten Quellencodes (R(MA)), wenn die Erledigung (58) des nächsten Steuerauftrags unterlassen wird, und
das Löschen (591) aller gespeicherten Quellencodes (R(MA)), wenn der nächste Steuerauftrag erledigt wird (58), außer wenn der nächste Quellencode (R(MA)) der Quelle (3,4) entspricht, deren Steuerauftrag erledigt wird.

4. Gerät (2) zum Erledigen von Steueraufträgen, empfangen von wenigstens zwei identifizierbaren Quellen (3, 4) über eine Kommunikationsverbindung (1), wobei dieses Gerät die nachfolgenden Elemente aufweist:
eine mit der Kommunikationsverbindung (1) gekoppelte Schnittstellenschaltung (22) zum Empfangen von Steueraufträgen, wobei jeder Steuerauftrag einen Quellencode (MA) entsprechend der Quelle (3, 4) aufweist, welche den Auftrag gesendet hat, und einen Auftragscode (CM) entsprechend einem in dem Steuertrag einverleibten Befehl, dadurch gekennzeichnet, daß das Gerät weiterhin eine Steuerschaltung (21) aufweist, die für Folgendes vorgesehen ist:
das Speichern (59; 591) bei Durchführung (58) eines empfangenen Steuerauftrags (59, 591), eines Auftragscodes (CM) entsprechend dem empfangenen Steuerauftrag zum Erhalten eines gespeicherten Auftragscodes (OLDCM),
das Speichern (59, 591) bei Durchführung (58) des empfangenen Steuerauftrags, eines Quellencodes (MA) entsprechend einer Quelle (3,4) des empfangenen Steuerauftrags zum Erhalten eines gespeicherten Quellencodes (OLDMA; R(MA)),
das Vergleichen (56) eines nächsten Auftragscodes (CM) eines nächsten empfangenen Steuerauftrags mit dem gespeicherten Auftragscode (OLDCM),
das Vergleichen (56) eines nächsten Quellencodes (MA) des nächsten empfangenen Steuerauftrags mit dem gespeicherten Quellencode (OLDMA; R(MA)), und
das Unterlassen (58) des nächsten empfangen Steuerauftrags, wenn der nächste Auftragscode (CM) dem gespeicherten Auftragscode (OLDCM) entspricht und der nächste Quellencode (MA) dem gespeicherten Quellencode (OLDMA; R(MA)) nicht entspricht.

5. Gerät nach Anspruch 4, dadurch gekennzeichnet, daß die Steuerschaltung (21) weiterhin dazu vorgesehen ist, zu detektieren (55), ob eine vorbestimmte Zeitperiode (7) zwischen dem Empfang (52) des nächsten Steuerauftrags und dem Empfang (52) eines dem nächsten Steuerauftrag vorhergehenden Steuerauftrags verstrichen ist, und die Durchführung (58) des nächsten Steuerauftrags nur dann zu unterlassen, wenn ebenfalls weniger als die vorbestimmte Zeitperiode (T) verstrichen worden ist.

6. Gerät nach Anspruch 4 oder 5, dadurch gekennzeichnet, daß die Steuerschaltung (21) weiterhin die nachfolgenden Elemente aufweist:
Mittel zum Speichern (572) des nächsten Quellencodes (R(MA)), wenn die Durchführung (58) des nächsten Steuerauftrags unterlassen wird, und
Mittel zum Löschen (591) aller gespeicherten Quellencodes (R(MA)), wenn der nächste Steuerauftrag durchgeführt (58) wird, ausgenommen dann, wenn der nächste Quellencode (R(MA)) der Quelle (3, 4) entspricht, deren Steuerauftrag erledigt worden ist.

7. Gerät nach Anspruch 4, dadurch gekennzeichnet, daß wenigstens eine der Quellen (3, 4) durch ein weiteres Gerät gebildet wird, das über die Kommunikationsverbindung (1) mit der Steuerschaltung (21) gekoppelt ist.

## Revendications

1. Procédé de traitement d'instructions de commande reçues d'au moins deux sources identifiables (3, 4) via une connexion de communication (1), caractérisé en ce que le procédé comprend les étapes suivantes:
stocker (59, 591), lors de l'exécution (58) d'une instruction de commande reçue, un code d'instruction (CM) correspondant à l'instruction de commande reçue pour obtenir un code d'instruction stocké (OLDCM) et un code de source (MA) correspondant à une source (3, 4) de l'instruction de commande reçue pour obtenir un code de source stocké (OLDMA; R(MA)),
comparer (56) un code d'instruction suivant (CM) d'une instruction de commande reçue suivante avec le code d'instruction stocké (OLDCM),
comparer (56) un code de source suivant (MA) de l'instruction de commande reçue suivante avec le code de source stocké (OLDMA; R(MA)), et
omettre l'exécution (58) de l'instruction de commande reçue suivante si le code d'instruction suivant (CM) est égal au code d'instruction stocké (OLDCM) et que le code de source suivant (MA) ne correspond pas au code de source stocké (OLDMA; R(MA)).

2. Procédé selon la revendication 1, caractérisé en ce que l'exécution (58) de l'instruction de commande suivante est omise s'il s'est écoulé moins d'une période de temps prédéterminée (T) entre la réception (52) de l'instruction de commande suivante et la réception (52) d'une instruction de commande précédant l'instruction de commande suivante.

3. Procédé selon la revendication 1 ou 2, caractérisé en ce que le procédé comprend en outre les étapes suivantes:
stocker (572) le code de source suivant (R(MA)) si l'exécution (58) de l'instruction de commande suivante est omise, et
effacer (591) tous les codes de source stockés (R(MA)) si l'instruction de commande suivante est exécutée (58), à l'exception du code de source suivant (R(MA)) correspondant à la source (3, 4) dont l'instruction de commande est en cours d'exécution.

4. Appareil (2) pour traiter des instructions de commande reçues d'au moins deux sources identifiables (3, 4) via une connexion de communication (1), l'appareil comprenant:
un circuit d'interface (22) couplé à la connexion de communication (1) pour recevoir des instructions de commande, chaque instruction de commande comprenant un code de source (MA) correspondant à la source (3, 4) qui a transmis l'instruction de commande et un code d'instruction (CM) correspondant à une instruction incorporée à l'instruction de commande, caractérisé en ce que l'appareil comprend en outre un circuit de commande (21) qui est à même :
de stocker (59; 591), lors de l'exécution (58) d'une instruction de commande reçue (59, 591), un code d'instruction (CA) correspondant à l'instruction de commande reçue pour obtenir un code d'instruction stocké (OLDCM),
de stocker (59, 591), lors de l'exécution (58) de l'instruction de commande reçue, un code de source (MA) correspondant à une source (3, 4) de l'instruction de commande reçue pour obtenir un code de source stocké (OLDMA; R(MA)),
de comparer (56) un code d'instruction suivant (CM) d'une instruction de commande reçue suivante avec le code d'instruction stocké (OLDCM),
de comparer (56) un code de source suivant (MA) de l'instruction de commande reçue suivante avec le code de source stocké (OLDMA; R(MA)), et
d'omettre l'exécution (58) de l'instruction de commande reçue suivante si le code d'instruction suivant (CM) est égal au code d'instruction stocké (OLDCM) et que le code de source suivant (MA) ne correspond pas au code de source stocké (OLDMA; R(MA)).

5. Appareil selon la revendication 4, caractérisé en ce que le circuit de commande (21) est en outre à même de détecter (55) si une période de temps prédéterminée (T) s'est écoulée entre la réception (52) de l'instruction de commande suivante et la réception (52) d'une instruction de commande précédant l'instruction de commande suivante, et d'omettre l'exécution (58) de l'instruction de commande suivante uniquement si, également, une période inférieure à la période de temps prédéterminée (T) s'est écoulée.

6. Appareil selon la revendication 4 ou 5, caractérisé en ce que le circuit de commande (21) comprend en outre:
des moyens pour stocker (572) le code de source suivant (R(MA)) si l'exécution (58) de l'instruction de commande suivante est omise, et
des moyens pour effacer (591) tous les codes de source stockés (R(MA)) si l'instruction de commande suivante est exécutée (58), à l'exception du code de source suivant (R(MA)) correspondant à la source (3, 4) dont l'instruction de commande est en cours d'exécution.

7. Appareil selon la revendication 4, caractérisé en ce qu'au moins l'une des sources (3, 4) est constituée par un autre appareil qui est couplé au circuit de commande (21) au moyen de la connexion de communication (1).
